# EUROPEAN PATENT APPLICATION

(11) **EP 2 086 070 A2**
(43) Date of publication of application: **05.08.2009**
(21) Application number: 09150185.8
(22) Date of filing: 08.01.2009
(51) Int. Cl.: H01S 3/067, H01S 3/23

(54) **Optical amplifier with time-multiplexed pump laser**

(30) Priority: 22.01.2008 US 18125
(71) Applicant: Avanex Corporation, Fremont, CA 94538 (US)
(72) Inventor: Duan, Xiadong, Fremont, CA 94536 (US); Barbarossa, Giovanni, Saratoga, CA 95070 (US)
(74) Representative: Gauer, Pierre

(57) **Abstract**

An optical amplifier that is configured to amplify multiple optical signals using time-multiplexed optical energy pulses. The time-multiplexed optical energy pulses are supplied to multiple gain blocks of the optical amplifier in an alternating manner and each of the gain blocks uses the optical energy pulses that it receives to amplify one of the multiple optical signals. An optical amplifier may be configured with an optical switch to perform a switching function to direct the time-multiplexed optical energy pulses received from the pump laser to the gain blocks in an alternating manner. The total optical energy contained in each optical energy pulse may be independently controlled by varying its duty cycle or amplitude.

## Description

### BACKGROUND OF THE INVENTION

### Field of the Invention

Embodiments of the present invention relate generally to optical amplifiers and more specifically to optical amplifiers used in fiber-optic communications networks.

### Description of the Related Art

Optical amplifiers are devices that allow the amplification of an optical signal directly, without the need for conversion to an electrical signal, and are pumped by a laser source to produce the desired signal gain. The laser source for an optical amplifier is typically a laser diode, referred to as a pump laser, and is typically the most expensive component in an optical amplifier. For applications in optical networks, optical amplifiers are commonly used in conjunction with wavelength division multiplexing (WDM), in which multiple wavelength signals contained in a single optical signal, referred to as channels, are amplified with a single optical amplifier. Because the optical amplifier serves multiple channels in WDM applications, the cost of the optical amplifier is distributed over a plurality of channels, and the per-channel cost of the pump laser contained in the optical amplifier is not a significant issue.

Single-channel applications for optical amplifiers include boosting optical transmission power (booster amplifier), amplifying signals for transmission over long distance (in-line amplifier), or amplifying signals at the receiver end (pre-amplifier). In single-channel applications, the per-channel cost of a conventional pump laser is a limiting factor in providing a cost-effective solution. This is because the pump laser cost does not scale downwardly in proportion to pump laser power. In addition, in single-channel applications, the pump laser cost is not distributed over multiple channels. Consequently, there is an on-going effort to reduce the per-channel cost of optical amplifiers in fiber-optic communications networks, particularly for single-channel applications.

One approach known in the art relies on the use of an optical power splitter to divide the optical energy of a single pump laser between multiple gain blocks. A substantial drawback of this method is the disproportionate increase in power consumption that results relative to the magnitude of amplification provided. When a power splitter is used to allow a single pump laser to amplify multiple optical signals, power consumption relative to amplification increases for two reasons. First, a loss of approximately 10 dB occurs at the splitter itself. Second, an optical power splitter amplifies each channel equally. As a result, all channels are amplified by the same factor as determined by the channel requiring the most amplification. The high power consumption also results in an increase in heat sink size, and a larger heat sink can appreciably increase the size and cost of an optical amplifier.

Therefore, there is a need in the art for methods and apparatus that provide optical amplification with a lower per-channel cost than prior art devices and that can do so without a power consumption penalty.

### SUMMARY OF THE INVENTION

Embodiments of the invention are directed to an optical amplifier that is configured to amplify multiple optical signals using time-multiplexed optical energy pulses. The time-multiplexed optical energy pulses are supplied to multiple gain blocks of the optical amplifier in an alternating manner and each of the gain blocks uses the optical energy pulses that it receives to amplify one of the multiple optical signals. An optical amplifier may be configured with an optical switch to perform a switching function to direct the time-multiplexed optical energy pulses received from the pump laser to the gain blocks in an alternating manner.

An optical amplifier according to an embodiment of the invention includes a pump laser for generating a series of optical energy pulses, and multiple gain blocks. Each gain block has an optical signal input through which an optical signal is to be received and a pump laser input through which a subset of the optical energy pulses generated by the pump laser is to be received. Where M is the number of gain blocks, the first of the M gain blocks receives the first optical energy pulse and every M-th optical energy pulse thereafter and the second of the M gain blocks receives the second optical energy pulse and every M-th optical energy pulse thereafter.

An optical amplifier according to another embodiment of the invention includes a pump laser, an optical switch coupled to the pump laser to receive optical energy pulses from the pump laser, and multiple gain blocks, each of which is coupled to the optical switch to receive a series of optical energy pulses from the optical switch for use in generating an amplified optical signal. The optical switch comprises a pump laser input and multiple pump laser outputs, each coupled to a different one of the gain blocks, and the optical switch directs the optical energy pulses received through the pump laser input to the multiple pump laser outputs in an alternating manner.

A method of amplifying multiple optical signals, according to an embodiment of the invention, includes the steps of generating first and second optical energy pulses with a single pump laser, directing the first optical energy pulse to a first gain block via an optical switch, directing the second optical energy pulse to a second gain block via the optical switch, and amplifying the optical signals received by the first and second gain blocks using the first and second optical energy pulses. The pulse width and/or the amplitude of the optical energy pulses may be varied so that the total optical energy that is supplied to the gain blocks can be controlled independently.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 is a block diagram of an optical amplifier according to an embodiment of the invention.

Figures 2A, 2B, and 2C are graphs of pump laser output v. time as generated in the optical amplifier of Figure 1.

For clarity, identical reference numbers have been used, where applicable, to designate identical elements that are common between figures. It is contemplated that features of one embodiment may be incorporated in other embodiments without further recitation.

### DETAILED DESCRIPTION

Embodiments of the invention contemplate an optical amplifier configured to multiplex the output of a single pump laser in the time domain, so that an optical energy pulse output from the single pump laser is directed to multiple gain blocks sequentially. The time period between the deliveries of optical pulses to each of the multiple gain blocks is controlled to be less than the mean lifetime of excited Erbium ions in the gain block. Consequently, the time multiplexing of the output power of the pump laser has little influence on the excited ion population in any gain block.

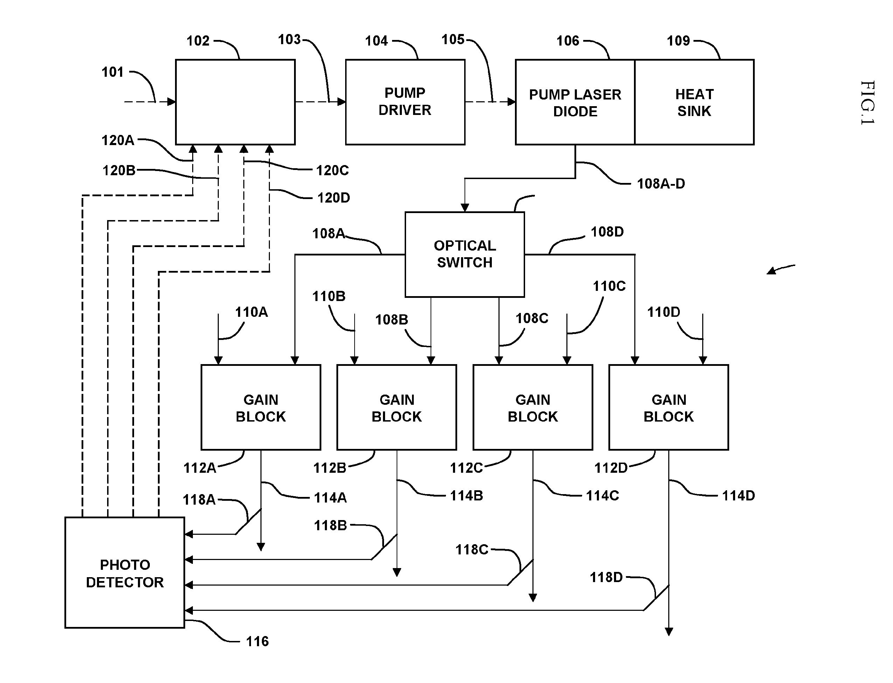

Figure 1 is a block diagram of an optical amplifier 100 according to an embodiment of the invention. Optical amplifier 100 is configured to amplify four optical input signals. In Figure 1, dashed arrows, *e.g.*, 101, 103 and 105, represent pathways of electrical or electronic signals, and solid arrows, *e.g.*, 110A-D, 114A-D and 118A-D, represent pathways of light or optical signals. Preferably, the optical pathways illustrated in Figure 1 are made up of optical fibers and any associated focusing, collimating, and/or other optics needed to insert light into and extract light out of the optical fibers. Alternatively, the various optical pathways illustrated in Figure 1 may be constructed using other optical components, such as free-space optics, *e.g.*, mirrors, prisms and lenses, or by using planar waveguides.

Optical amplifier 100 includes a plurality of optical gain blocks 112A-D that receive a plurality of optical signals 110A-D to be amplified, and generate a plurality of amplified optical signals 114A-D using optical energy pulses 108A-D generated by a pump laser diode 106 and switched through optical switch 107. In this embodiment, optical gain blocks 112A-D include an Erbium-doped fiber, and a heat sink 109 is positioned adjacent pump laser diode 106 to provide cooling as necessary.

Optical switch 107 is an optical switching device capable of routing optical signals on the timescale required to maintain each of optical gain blocks 112A-D in a state of stimulated emission between optical energy pulses. In the embodiment illustrated in Figure 1, the switching time of optical switch 107 is at least about an order of magnitude less than the pulse period of the optical energy pulses. For optical energy pulses having a period of about 10 ms, optical switch 107 is configured to have a switching time of less than 1 ms. Such optical switch may be a semiconductor switch, such as a gallium arsenide or indium-phosphide switch, a magnetic switch, or a switch based on an electro-optic ceramic material, such as lead-lanthanum-zirconate-titanate (PLZT), among others. Electro-mechanical switches may also be used in some situations.

Optical amplifier 100 includes a pump driver 104 for providing a pulsed drive current 105 to pump laser diode 106 and a pump controller 102 for providing a pulsed electric control signal 103 to pump driver 104. Optical amplifier 100 further includes a photo-detector 116 that is optically coupled to amplified optical signals 114A-D of optical gain blocks 112A-D and is electrically coupled to pump controller 102.

In operation, optical amplifier 100 receives optical signals 110A-D and amplifies each according to the desired amplifier set point information provided in a setpoint signal 101, thereby producing amplified optical signals 114A-D. To that end, pump controller 102 receives the desired amplifier set point information in setpoint signal 101, and generates pulsed electric control signal 103. Pulsed electric control signal 103 is based on the desired amplifier set point information provided in setpoint signal 101 and on information contained in feedback signals 120A-D related to the optical power of amplified optical signals 114A-D, respectively. Pump driver 104 receives pulsed electric control signal 103 and produces pulsed drive current 105, which is sent to pump laser diode 106. The form of pulsed drive current 105 is related to the information provided in pulsed electric control signal 103.

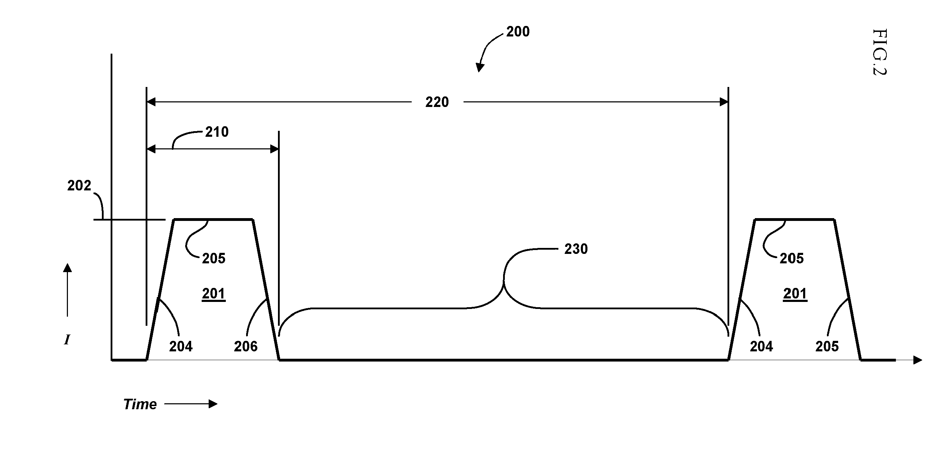

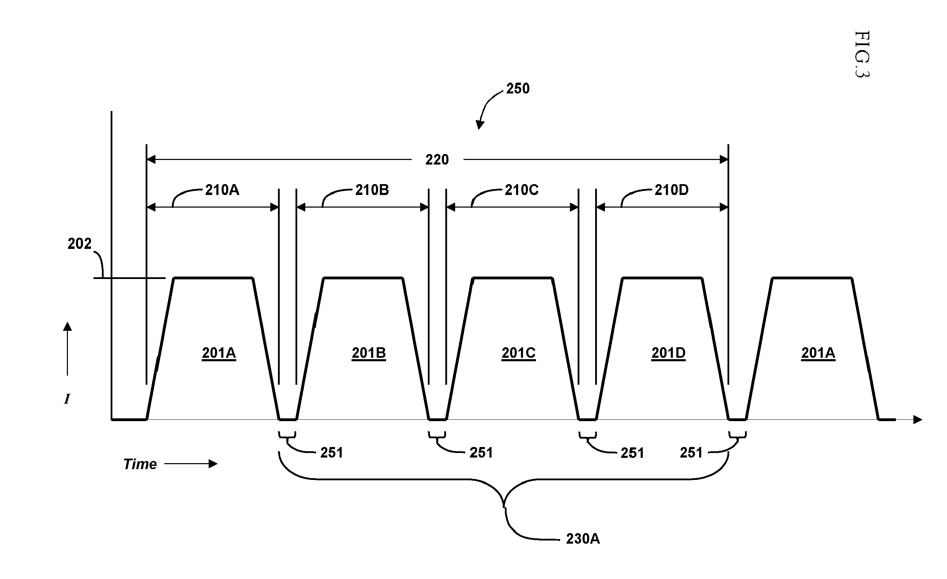

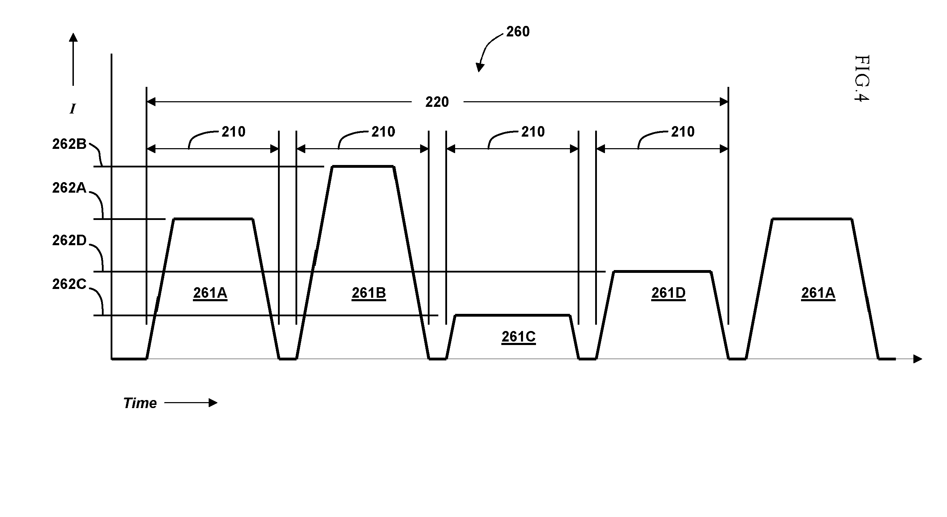

Pump laser diode 106 receives pulsed drive current 105 and produces optical energy pulses 108A-D, where optical energy pulses 108A-D are arranged sequentially in a repeating pulse period in a fashion substantially similar to the pump laser output 250 shown in Figure 2B. In order to provide the optical gain necessary to produce amplified optical signals 114A-D that match a desired amplifier setpoint, pulsed drive current 105 is adapted to independently vary the total optical energy contained in each of optical energy pulses 108A-D as required. In one embodiment, the pulse width of each of optical energy pulses 108A-D is modulated to vary the total optical energy contained therein. In such embodiment, the maximum output of optical energy during each energy pulse is held constant. In another embodiment, the maximum output of optical energy during each of optical energy pulses 108A-D is modulated to vary the total optical energy contained therein. In such embodiment, the pulse width of each energy pulse is held constant. In yet another embodiment, both the pulse width and the maximum output of optical energy during each energy pulse are modulated to vary the total optical energy contained therein. In the embodiments described herein, it is understood that the total optical energy contained in each of optical energy pulses 108A-D is independently controlled, and therefore the gain applied to each of optical signals 110A-D by optical amplifier 100 is independently controlled. Pulse-width and intensity modulation of optical energy pulses, such as optical energy pulses 108A-D, are described in greater detail below in conjunction with Figures 2B and 2C.

After pump laser diode 106 produces optical energy pulses 108A-D, optical switch 107 then directs optical energy pulses 108A-D to optical gain blocks 112A-D, respectively. Gain blocks 112A-D receive optical signals 110A-D, respectively, and optical energy pulses 108A-D, respectively, to produce amplified optical signals 114A-D, respectively. The photo-detector 116 receives a sample portion 118A-D of each amplified optical signal 114A-D and outputs a corresponding feedback signal 120A-D to the pump controller 102. As noted above, feedback signals 120A-D provide information to pump controller 102 related to the optical power of amplified optical signals 114A-D, respectively, for comparison to the desired amplifier set point for each of gain blocks 112A-D, respectively.

Advantages of the embodiment described herein over the prior art include improvements in cost, size, complexity of control software, and power consumption of an optical amplifier configured for single-channel applications. When an optical amplifier configured with a single pump laser is, according to embodiments of the invention, used to independently amplify multiple optical signals, the per-channel cost of the optical amplifier is substantially reduced. This is due to cost sharing of common components, such as the pump laser diode, heat sink, electronics, housing, etc. In addition, by consolidating a number of components into a single mechanical package, the size of an optical amplifier configured to amplify multiple single-channel signals is generally smaller than multiple prior art optical amplifiers configured to amplify the same single-channel signals individually. For example, only a single pump controller, pump driver, pump laser diode, and heat sink are required for an optical amplifier configured according to embodiments of the invention, whereas each of these components is generally required for every prior art, single-channel optical amplifier. Further, control software is simplified, since a single pump controller and pump driver are used to control the amplification of multiple optical signals. Lastly, because the amplification of each optical signal is independently controlled, the increased power consumption associated with the use of an optical splitter is avoided.

As noted above, embodiments of the invention contemplate time-multiplexing of the pump laser output to multiple gain blocks by directing an optical energy pulse to each gain block sequentially. Figure 2A is a graph of pump laser output 200 to a gain block vs. time, according to an embodiment of the invention. In this embodiment, pump laser output 200 is made up of a plurality of individual optical energy pulses 201, each having a maximum intensity 202 and a pulse width 210, and separated by a zero-output interval 230. During zero-output interval 230, essentially no optical energy is directed at the gain block by the pump laser. For clarity, only two optical energy pulses 201 are illustrated, although it is understood that pump laser output 200 is made up of a large number of optical energy pulses 201 occurring sequentially. As shown, one optical energy pulse 201 per pulse period 220 is directed to a particular gain block. The length of pulse period 220 is selected to be substantially less than the mean lifetime of excited ions in the gain medium of the gain block. For example, when pump laser output 200 is directed to an Erbium-doped fiber, pulse period 220 is no more than about 10 ms in duration, which is less than the mean lifetime of an excited ion in an Erbium-doped fiber. Consequently, photon generation in the gain block for amplifying an optical signal takes place by stimulated emission throughout pulse period 220. Even though optical energy in the form of optical energy pulse 201 is directed to the gain block for only a portion of pulse period 220, *i.e.*, for pulse width 210, the output power of the gain block is effectively the time-average of the total optical energy input into the gain block over pulse period 220.

When a gain block is pumped using pump laser output 200, the output power of the gain block can, within limits, be increased or decreased by using pulse-width modulation, i.e., modulating the duration of pulse width 210. This is because the total optical energy contained in an optical energy pulse 201 is equal to the area under the curve that defines optical energy pulse 201 in Figure 2A, *i.e.*, the region bounded by rise time 204, maximum output 205, and fall time 206. For example, the output power of the gain block can be increased by lengthening the duration of pulse width 210 and, conversely, the output power of the gain block can be decreased by shortening the duration of pulse width 210. The maximum duration of pulse width 210 is limited by the number of gain blocks sequentially pumped by the pump laser and by the duration of pulse period 220. For example, when a pump laser sequentially provides pump laser output 200 to two gain blocks and the duration of pulse period 220 is 10 ms, the maximum duration of pulse width 210 provided to each gain block is approximately 5 ms, which is a 50% duty cycle. "Duty cycle," as used herein, is defined as the percentage of pulse period 220 during which optical output 200 is non-zero. In another example, when a pump laser sequentially provides pump laser output 200 to four gain blocks, the maximum duty cycle for each optical energy pulse 201 is about 25%.

Figure 2B is a graph of pump laser output 250 vs. time, where pump laser output 250 is used to amplify four gain blocks, according to an embodiment of the invention. In this embodiment, pump laser output 250 is made up of a plurality of individual optical energy pulses 201A-D, each having a maximum intensity 202 and a pulse width 210A-D. As shown, optical energy pulses 201A-D are arranged sequentially in each pulse period 220, and then are repeated in subsequent pulse periods. For clarity, only one pulse period 220 is illustrated in Figure 2B. Each of optical energy pulses 201A-D is directed to a different respective gain block for amplifying an optical signal, as described above in conjunction with Figure 1, and is separated from adjacent optical energy pulses by a switching time 251. Hence, optical energy pulse 201A is directed to a first gain block during pulse width 210A. Then, for the duration of zero-output interval 230A, no further optical energy is directed to the gain block. Instead, during zero-output interval 230A optical energy is sequentially directed to a second, a third, and a fourth gain block via optical energy pulses 201B-D, respectively. As shown in Figure 2B, each of optical energy pulses 201A-D has a duty cycle of approximately 25%. However, it is contemplated that the total optical energy contained in each of optical energy pulses 201 A-D may be modulated by varying the duty cycle of each energy pulse as required to independently control the optical amplification of each corresponding gain block.

Switching time 251 represents the switching time of optical switch 107 in Figure 1. As noted above, it is advantageous for the duration of switching time 251 to be less than about an order of magnitude less than the duration of pulse period 220 in Figure 2B. Referring to Figure 2B, it can be seen that when switching time 251 is on the order of 10% of pulse period 220 or more, the pulse widths 210A-D of optical energy pulses 201A-D may be substantially reduced, thereby limiting the maximum optical gain that can be provided to multiple optical signals by an optical amplifier according to embodiments of the invention.

It is also contemplated that the total optical energy contained in each pulse 201 can be varied by modulating the maximum intensity 202 of each pulse. Intensity modulation is particularly beneficial when pulse-width modulation may be limited, *e.g.*, when four or more gain blocks are pumped by a pump laser, and the maximum allowable duty cycle of each pulse 201 is 25% or less. Figure 2C is a graph of pump laser output 260 vs. time, where pump laser output 260 is used to amplify four gain blocks, according to an embodiment of the invention. In this embodiment, pump laser output 260 is made up of a plurality of individual optical energy pulses 261A-D, each having a pulse width 210 and a maximum intensity 262A-D, respectively. As shown, the total optical energy provided to each gain block, *i.e.*, the area under optical energy pulses 261A-D, is varied based on maximum intensities 262A-D, respectively. Hence, total optical energy content of each pulse may be varied by pulse-width modulation, intensity modulation, or a combination of both. In this way, the amplification of multiple gain blocks is independently controlled even though only a single pump laser is used to provide optical energy to each of the gain blocks.

It is contemplated that embodiments of the invention may be used to amplify multiple optical inputs in other applications, as well. For example, high-power applications, such as laser welding, may also benefit from the time-multiplexing of pump laser output to amplify multiple optical inputs. In this case, a gain block may contain different dopants and have a substantially different mean lifetime than the embodiments described herein. Hence, the associated pulse width and pulse period of this embodiment may differ with respect to other embodiments described herein.

While the foregoing is directed to embodiments of the present invention, other and further embodiments of the invention may be devised without departing from the basic scope thereof, and the scope thereof is determined by the claims that follow.

## Claims

1. An optical amplifier comprising:
a pump laser for generating a series of first through N-th optical energy pulses, where N is at least 2; and
multiple gain blocks, each having an optical signal input through which an optical signal is to be received and a pump laser input through which a subset of said first through N-th optical energy pulses is to be received.

2. The optical amplifier according to claim 1, wherein the number of gain blocks is M and the M gain blocks include a first gain block and a second gain block, and wherein the first gain block receives the first optical energy pulse and every M-th optical energy pulse thereafter and the second gain block receives the second optical energy pulse and every M-th optical energy pulse thereafter.

3. The optical amplifier according to claim 2, further comprising an optical switch for directing the optical energy pulses from the pump laser to the pump laser input of one of the multiple gain blocks.

4. The optical amplifier according to claim 3, wherein the optical switch is configured to have a switching time that is less than 10% of a pulse period of the optical energy pulses.

5. The optical amplifier according to claim 4, wherein the optical switch comprises one of a semiconductor switch, a magnetic switch, and a switch based on an electro-optic ceramic material.

6. The optical amplifier according to claim 1, wherein each of the multiple gain blocks includes an Erbium-doped fiber.

7. The optical amplifier according to claim 6, wherein a time period between two successive optical energy pulses received by any of the multiple gain blocks is substantially less than the mean lifetime of excited Erbium ions in a gain medium of said any of the multiple gain blocks.

8. A method of amplifying multiple optical signals, comprising the steps of:
generating first and second optical energy pulses with a single pump laser;
directing the first optical energy pulse to a first gain block via an optical switch;
directing the second optical energy pulse to a second gain block via the optical switch; and
amplifying the optical signals received by the first and second gain blocks using the first and second optical energy pulses.

9. The method according to claim 8, further comprising the step of varying a total energy contained in at least one of the optical energy pulses.

10. The method according to claim 9, wherein the total energy contained in an optical energy pulse is varied by modifying a pulse width of the optical energy pulse.

11. The method according to claim 9, wherein the total energy contained in an optical energy pulse is varied by modifying an amplitude of the optical energy pulse.

12. The method according to claim 8, wherein the single pump laser is driven by a pulsed drive current from a pump driver.

13. The method according to claim 12, wherein the pump driver produces the pulsed drive current from a pulsed electric control signal that is based on a desired amplified set point information and feedback signals.

14. The method according to claim 13, wherein the feedback signals are generated from amplified optical signals produced by the gain blocks.

15. An optical amplifier configured to amplify multiple optical signals, comprising:
a pump laser;
an optical switch coupled to the pump laser to receive optical energy pulses from the pump laser; and
multiple gain blocks, each of which is coupled to the optical switch to receive a series of optical energy pulses from the optical switch for use in generating an amplified optical signal.
